# EUROPÄISCHE PATENTSCHRIFT

(11) **EP 1 953 305 B1**
(45) Veröffentlichungstag und Bekanntmachung des Hinweises auf die Patenterteilung: **03.04.2013**
(21) Anmeldenummer: 07405026.1
(22) Anmeldetag: 31.01.2007
(51) Int. Cl.: E04D 1/12, E04D 1/16, H01L 31/048

(54) **Wetterfeste Gabäudehülle**
Weather-proof building cladding
Enveloppe de bâtiment résistant aux intempéries

(43) Veröffentlichungstag der Anmeldung: 06.08.2008
(73) Patentinhaber: Posnansky, André, 3013 Bern (CH); Posnansky, Frank, 1985 Villa La Sage (CH)
(72) Erfinder: Posnansky, Mario, 1985 La Sage (CH)
(74) Vertreter: Rüfenacht, Philipp Michael

(56) Entgegenhaltungen:
- WO-A-01/04436
- DE-A1- 1 937 065
- DE-A1- 10 046 134

## Beschreibung

### Technisches Gebiet

Die Erfindung betrifft eine wetterfeste Gebäudehülle, insbesondere Schrägdach, mit mehreren viereckigen wetterfesten Platten.

### Stand der Technik

Die Nutzung der täglich einfallenden Sonnenstrahlung auf Dächer und Fassaden von bewohnten oder unbewohnten Gebäuden zur Gewinnung von Energie in Form von elektrischem Strom und Wärme hat bereits eine grosse Bedeutung erlangt.

Aufgrund der Endlichkeit der fossilen Energiequellen, und auch von Uran, ist die Erschliessung von unerschöpflichen Energiequellen wie diejenige der Sonne von grosser Wichtigkeit für unsere künftige Energieversorgung.

Die Reduktion der Verbrennung bzw. der vermehrte Ersatz fossiler Energiequellen ist aber auch aus ökologischen Gründen notwendig.

Die Entwicklung der letzten Jahre hat gezeigt, dass die grossmasstäbliche Gewinnung an Solarstrom und Wärme möglich ist. Bereits heute beträgt die jährliche Produktion von Solarzellen zur Stromerzeugung bereits über 1400 MW, entsprechend einer Fläche von ca. 14 km². Die gegenwärtige jährliche Zuwachsrate beträgt ca. 40%. Zur Gewinnung von Wärme wurden bis im Jahr 2004 alleine auf deutschen Dächern bereits 6 Millionen m² Kollektorfläche installiert. Bis im Jahr 2012 soll diese verdoppelt werden.

Während die Photovoltaikmodule jetzt vermehrt auf Dächer aufgesetzt werden, ist die Belegung von Dachabschnitten mit thermischen Kollektoren durch die Verlegung von wasserführenden Absorbern zur Regel geworden. Die technische Entwicklung führt aus kostentechnischen und ästhetischen Gründen jedoch vermehrt zur Integration der Solarsysteme in Dachhaut, Fassaden und Oberlichter und Beschattungseinrichtungen. Dabei übernehmen die Photovoltaikmodule und die thermischen Kollektoren auch die Dach- und Fassadenfunktion.

Vermehrt sind es grossflächige Photovoltaik-Dachelemente, welche als « Solardach » für den Dachaufbau eingesetzt werden. Ein Beispiel dafür ist das von der deutschen Firma SolarWorld AG auf dem Markt angebotene Dachelement. Dazu müssen spezielle, aufwendige Massnahmen für die Befestigung, aber vor allem für die Erzielung der Wasserdichtheit getroffen werden (Seiten- und Querprofile, Gummidichtungen etc). Davon getrennt werden auf oder in die Dächer thermische, meist wasserführende Sonnenkollektoren eingebaut. Bekannt sind auch so genannte Luftkorrektoren, die als Dachaufbauten mit der erzeugten Warmluft vor allem für die Heutrocknung Verwendung finden. Aus der Patentschriftnummer US5,990,414 ist eine sehr ästhetische Ausführung von überlappenden Dachschindeln zur Photovoltaik-Stromerzeugung bekannt.

Die Photovoltaikmodule oder Dachelemente selber bestehen im Wesentlichen aus dünnen, flächig ausgebildeten, zerbrechlichen Siliziumsolarzellen in Streifen oder Scheibenform. Zum Schutz gegen mechanische und chemische Beschädigung werden die Zellen in einem elastischen transparenten Material, meist EVA (Ethylvinylacetat), zwischen der vorderen transparenten Frontseite aus gehärtetem Glas oder Kunststoff und einer rückseitigen Folie oder Glas eingebettet. Die Solarzellen werden miteinander elektrisch verbunden, so dass die erzeugte Modulspannung über eine meist rückseitig angeordnete Anschlussdose abgegriffen werden kann. Eine Vielzahl solcher Module oder Dachelemente werden in Serie und parallel weiter verbunden, um die jeweils erwünschte Systemspannung bzw. Gleichstromleistung zu erhalten. Meist wird der Strom ins öffentliche Netz über einen Wechselrichter eingespiesen oder bei kleinen Inselanlagen in Batterien zwischengespeichert.

Die DE 100 46 134 befasst sich mit Solarziegeln zum Erstellen eines wetterfesten Solardaches, und weist die Merkmale des Oberbegriffs von Anspruch 1 auf. Die Ziegel bestehen z. B. aus einer "im Wesentlichen rautenförmigen" Trägerplatte mit einer etwas kleineren quadratischen Solarzelle, welche bündig in einer (unteren) Ecke der Trägerplatte angeordnet ist, so dass an zwei Seiten die Trägerplatte übersteht bzw. ein solarzellenfreier Bereich besteht. Die Ziegel werden mit der oben liegenden Seite bzw. Ecke an horizontal verlaufenden Montageschienen befestigt. Die Montageschiene hat einen im Wesentlichen U-förmigen Querschnitt mit einem an der offenen Seite nasenartig nach oben ragenden Profilabschnitt, an welcher ein auf der Rückseite des Ziegels angebrachter Haken eingehängt werden kann. Der Ziegel kann statt eines Hakens auch am oberen Ende eine Bohrung aufweisen, durch welche ein Bolzen geführt ist, welcher im Montageprofil einhängt. Der den oberen Bereich des Ziegels überdeckende Schenkel der Montageschiene ist mit einer Dichtlippe versehen.

Bekannt sind so genannte dünne Schichten aus amorphem Silicium, CulS₂, oder anderen Halbleitermaterialien, bzw. chemische Verbindungen, die ebenfalls zum Bau von Modulen oder Dach- und Fassadenelementen verwendet werden. Diese Schichten werden auf Glas oder transparenten Kunststoff aufgebracht, wobei auf der Vorder - und/oder Rückseite Kunststofffolien zum Schutz gegen mechanische oder chemische Einflüsse verwendet werden.

Es sind Solarsysteme bekannt, jedoch bisher kaum eingesetzt worden, bei denen die Sonnenstrahlung für die Erwärmung von in Rohrleitungssystem geführten Wasser- oder Luftströmen genutzt wird und gleichzeitig Strom mittels der Photovoltaik erzeugt wird.

Die Gesamtkosten von solchen mit Solarsystemen bestückten Dächern sind sehr hoch und damit wird ein wichtiger Vorteil der Multifunktionalität in Frage gestellt. Die Funktionalität und Wärmeausbeute sind unbefriedigend, ebenso die ästhetischen Gegebenheiten und die Eignung zum Bau von einheitlichen Dächern. Auch eignen sich die bekannten Systeme nicht für die zur Kostensenkung der Energieerzeugung notwendige Massenfertigung. Sie wiesen meist auch aufwendige Strukturen für die Dachintegration auf. Die energiegewinnenden Dachelemente, die konventionelle Dachelemente substituieren (Ziegel, Schindeln etc.) müssten kostengünstiger gestaltet und installiert werden können. All die erwähnten Faktoren beeinträchtigen die Wirtschaftlichkeit der kombinierten Strom/Wärme-Gewinnung.

### Darstellung der Erfindung

Aufgabe der Erfindung ist es, eine dem eingangs genannten technischen Gebiet zugehörende wetterfeste Gebäudehülle mit mehreren viereckigen wetterfesten Platten zu schaffen, welche die Nutzung der Solarenergie erlaubt und gleichzeitig ästhetisch ansprechend ist.

Die Lösung der Aufgabe ist durch die Merkmale des Anspruchs 1 definiert. Gemäss der Erfindung sind die Platten bezüglich einer Falllinie in Diagonallage mit schuppenartiger gegenseitiger Überlappung verlegt. Die Überlappung ist so bemessen, dass das Wasser nicht unter der Überlappung hindurch nach innen gelangen kann. Aufgrund der Diagonallage sind die Platten, welche sich quer zur Falllinie in einem Randbereich überlappen, zueinander versetzt. Die Platten sind jeweils an einem bezüglich der Falllinie unten liegenden Eckbereich mit einer Tragkonstruktion verbunden. Bei dem genannten Eckbereich der Platte ist ferner ein Dichtungselement angeordnet, welches einen Spalt zwischen quer zur Hauptrichtung von auf gleicher Höhe angeordneten Platten verschliesst.

Das erfindungsgemässe System ist einfach aufgebaut und kann verschiedene technische Funktionen realisieren. So können die Platten zur Gewinnung von elektrischer Energie mit Solarzellen ausgerüstet sein. Sie können auch nur zur Gewinnung von thermischer Energie dienen. Wichtig ist, dass das System im Grundsatz so ausgelegt ist, dass die Anordnung der Platten von Anwendung zu Anwendung variiert werden kann, so dass bei gegebener Plattenabmessung auch verschiedenste (je individuelle) Dimensionen der Gebäudehülle wetterfest und ästhetisch befriedigend realisiert werden können. Insbesondere kann das von vielen als unschön bezeichnete Muster von "Seite an Seite", quadratisch verlegten Platten ("Badezimmerplättli-Muster") vermieden werden.

Die Erfindung eignet sich vor allem für Schrägdächer. Es sind aber auch Fassadenverkleidungen möglich. Die Neigung der Falllinie sollte zumindest so stark sein, dass das Wasser, welches auf den entsprechenden Teil der Gebäudehülle trifft, nicht eindringen kann, sondern ausschliesslich aussen abfliesst.

Im Gegensatz zu vielen vorbekannten Solardachkonstruktionen erfordert eine erfindungsgemässe Konstruktion nicht zwei separate Hüllen. Vielmehr sind der Wetterschutz und die Energiegewinnung in einer einzigen Hülle, nämlich in den erfindungsgemäss angeordneten und verankerten Platten.

Als "direkt benachbart" werden im vorliegenden Fall diejenigen Platten bezeichnet, die sich über eine gewisse Länge des Randbereichs (und nicht nur in einem Eckbereich) überlappen. Als "indirekt benachbart" werden diejenigen Platten bezeichnet, die typischerweise auf gleicher Höhe bezüglich der Falllinie nebeneinander sind, sich aber nicht überlappen.

Unter einer Diagonallage ist eine Anordnung zu verstehen, bei welcher sich beim Verbinden der Zentren der unmittelbar benachbarten Platten eine Raute ergibt, welche in Falllinienrichtung auf ihrer Spitze steht.

Vorzugsweise haben die viereckigen Platten in zwei einander gegenüber liegenden Eckbereichen je eine Durchtrittsöffnung für ein Befestigungselement. Die Platten sind somit an ihrem in Falllinienrichtung unten und oben liegenden Eckbereichen mit der Tragkonstruktion verbunden. Als Verbindungselement eignet sich ein Bolzen, eine Schraube, ein Haken oder ein sonstiges Element, welches geeignet ist, die Platte gegen Sturmböen gesichert zu fixieren.

Die Platten können auch ohne Durchtrittsöffnungen ausgeführt sein, wenn zu ihrer Befestigung z. B. ein Klemmelement verwendet wird, welches den Rand umgreift. Es ist auch denkbar, dass an der der Gebäudeinnenseite zugewandten Hauptfläche der Platte ein Zapfen-, ein Ösen- oder ein ähnliches Element angebracht ist, welches mit einem Befestigungselement zusammenwirkt, welches auf der Tragkonstruktion angebracht ist.

Die Platten weisen vorzugsweise eine Glasplatte auf, welche die Gebäudeaussenseite bildet. Glas ist langlebig und hält den Wettereinflüssen am besten Stand. Um die Solarenergie nutzen zu können, ist die Platte zusätzlich mit Solarzellen ausgerüstet. Diese haben eine quadratische Form und sind in einem Solarzellenbereich der Platte untergebracht. Sie können die Fläche vollständig abdecken. Es sind aber auch Anordnungsvarianten möglich, bei denen die Solarzellen einen gewissen gegenseitigen Abstand haben, so dass noch ein Teil des Sonnenlichts durch die Platte hindurch gelassen wird. Der Solarzellenbereich ist typischerweise quadratisch und hat einen gewissen Abstand zum Rand der Platte. Der Randbereich, welcher den Solarzellenbereich umgibt, ist nach der erforderlichen Überlappung der verlegten Platten bemessen. Er beträgt z. B. einige wenige Zentimeter.

Es ist erwünscht, dass das Dach eines Gebäudes einen einheitlichen Eindruck erweckt. Zu einem Plattensystem gehören daher nicht nur Platten mit, sondern auch solche ohne Solarzellen. Die Platten mit Solarzellen werden an den sonnenexponierten Stellen verlegt und die Platten ohne Solarzellen an den der Sonne abgewandten Seite. Ferner gibt es im System auch solarzellenfreie Platten für den Randabschluss des Daches. Solche Platten sind in aller Regel nicht quadratisch oder rechteckig, sondern z. B. dreieckig. Die Form dieser Platten kann sich durch eine Zerteilung der regulären (z. B. quadratischen) Plattenform parallel zu einer Diagonallinie in zwei ungleich grosse Teile ergeben.

Die Platten ohne Solarzellen können zur Gewinnung der thermischen Solarenergie genutzt werden, indem sie das Sonnenlicht auf eine schwarze Unterlage (Folie) unter der Glasplatte fallen lassen, wobei die von der Folie produzierte Wärme mit einem Luftstrom abtransportiert und über einen z. B. im Dachgiebel untergebrachten Wärmetauscher genutzt werden kann (vgl. Anmeldung CH 965/06 vom 14. Juni 2006, veröffentlicht als CH 699140B).

Die Viereckform ist in aller Regel ein Quadrat. Es sind aber auch rechteckige oder andere Formen möglich (z. B. Rhombus). Die quadratische Form ist deshalb bevorzugt, weil die Solarzellen heute im Normalfall quadratisch sind und weil somit die beste Ausnutzung der Dach- oder Wandfläche zur Energiegewinnung möglich ist.

Bei quadratischen Platten (und entsprechend quadratischem Solarzellenbereich) kann eine neuartige Verlegung ohne Verlust an Energieausbeute erreicht werden, wenn in einem Eckbereich der Platte der Randbereich erweitert ist. Anstatt n² Solarzellen vorzusehen, werden nur n²-1 Solarzellen vorgesehen, d. h. in einer Ecke fehlt eine Solarzelle.

Die Erfindung ist also nicht darauf beschränkt, dass der Solarzellenbereich die gleiche Form wie die Platte insgesamt hat.

Bei der erfindungsgemässen Diagonallage mit schuppenartiger gegenseitiger Überlappung sind im Prinzip drei Anordnungen denkbar.

A: Die quer zur Falllinienrichtung auf gleicher Höhe angeordneten Platten sind gegenseitig beabstandet. Die Mittelpunkte der unmittelbar benachbarten Platten bilden die Ecken einer quer zur Falllinie in die Breite gezogenen Raute.

B: Die quer zur Falllinienrichtung auf gleicher Höhe angeordneten Platten berühren sich gerade. Die Mittelpunkte der unmittelbar benachbarten Platten bilden die Ecken eines Quadrats. ("Grenzfall").

C: Die quer zur Falllinienrichtung auf gleicher Höhe angeordneten Platten würden sich überlappen, wenn sie quadratisch wären. Die Mittelpunkte der unmittelbar benachbarten Platten bilden die Ecken einer quer zur Falllinie gestauchten Raute. Damit sich die Platten nicht überlappen, sind die auf gleicher Höhe bezüglich der Falllinie liegenden Ecken abgeschnitten.

Im Rahmen der vorliegenden Erfindung ist die Variante A bevorzugt. Sie hat den Vorteil, dass mit ein und derselben Plattengeometrie verschiedene Dachgeometrien abgedeckt werden können, ohne dass im Verlegungsprinzip eine Änderung vorgenommen werden muss. Ist z. B. die Breite des Dachs bei der Planung nicht richtig aufgenommen worden, kann beim Verlegen der Platten einfach der Abstand zwischen den auf gleicher Höhe angeordneten Platten etwas grösser oder kleiner als geplant gewählt werden. Der Gesamteindruck der Plattenverlegung ändert sich für den Betrachter nicht.

Da das erfindungsgemässe Dachsystem dazu geeignet sein soll, die Solarenergie thermisch zu nutzen und zwar insbesondere mit einem unter der Gebäudeaussenhülle in einem Flachspalt geführten Luftstrom, ist das Dichtungselement so auszuführen, dass zwischen den auf gleicher Höhe bezüglich der Falllinie benachbarten Platten keine Luft eindringen oder austreten kann. Das Dichtungselement ist z. B. ein Teil aus Kunststoff, der die gleiche Dicke wie die Platten hat, und der an die Aussenform der Platten im Bereich deren auf gleicher Höhe liegenden Ecken angepasst ist. Das Dichtungselement wird vorzugsweise am Befestigungselement für die Platten angebracht. Es ist vorzugsweise unter der unteren Ecke der oberen Platte versteckt.

Vorzugsweise hat das Dichtungselement eine Durchtrittsöffnung für das Befestigungselement und ist plattenförmig.

Das System zum Erstellen einer die Solarenergie nutzenden Gebäudehülle basiert vorzugsweise auf einer viereckigen, vorzugsweise quadratischen Platte, welche eine Scheibe aus Glas oder einem glasähnlichen Material und zwei diametral gegenüberliegend angeordneten Eckbereiche aufweist, welche je mit einer Durchtrittsöffnung für ein Befestigungselement versehen sind. Wie aus den vorangegangenen Erläuterungen ersichtlich ist, ist das System aber nicht auf solche Platten beschränkt.

Das System umfasst auch einen Bausatz zum Erstellen einer zur Nutzung der Solarenergie geeigneten Gebäudehülle. Zum Bausatz gehören die erwähnten viereckigen wetterfesten Platten, welche bezüglich einer Falllinie in Diagonallage mit schuppenartiger gegenseitiger Überlappung verlegbar sind. Weiter gehören zum Bausatze Befestigungselemente, um die Platten jeweils an einem bezüglich der Falllinie unten liegenden Eckbereich mit einer Tragkonstruktion zu verbinden. Ferner umfasst der Bausatz auch Dichtungselemente, um bei dem genannten Eckbereich der Platte angeordnet zu werden und einen Spalt zwischen quer zur Hauptrichtung auf gleicher Höhe angeordneten Platten zu verschliessen.

Die erfindungsgemässe Gebäudehülle und der Bausatz zum Erstellen derselben sind als Teil eines Gesamtsystems zur Nutzung von Solarenergie zu sehen.

Eine bevorzugte Ausführungsform besteht z. B. darin, dass im Abstand von einem Unterdach transparente oder wenigstens teilweise mit flächig ausgebildeten Solarzellen ausgerüstete Glasdachplatten vorlegt und abgedichtet sind, welche einen luftdichten, in Strömungsrichtung weitgehend hindemisfreien Flachspalt bilden (keine Dachsparen). Es sind wenigstens eine Eintrittsöffnung für die Kaltluft, wenigstens eine Austrittsöffnung für die Warmluft und eine luftdichte äussere Dachumrandung bzw. eine luftdichte seitliche Begrenzung des Flachspaltes vorgesehen.

Es wird bei dieser Ausführungsform ein Luftstrom durch den Flachspalt geführt, welcher kalt eingeleitet und erwärmt genutzt wieder in die Atmosphäre abgelassen wird. In gewissen Fällen können auch geschlossene Kreisläufe installiert werden, welche mit Luft oder einem andere gasförmigen Medium betrieben werden.

Der Abstand zwischen dem flach ausgebildeten Unterdach (ohne die üblichen Dachsparen) und den Glasdachplatten liegt vorzugsweise im Bereich von 15-30 mm. Der Abstand bestimmt sich aufgrund von Auslegungsparametern, wie z. B. der erwünschten Temperaturerhöhung, der Höhe des Daches, des zu erwartender thermischen Wirkungsgrades und der festgelegten Luftgeschwindigkeit.

Nach einer Variante kann sich der Flachspalt nach oben aufweiten. Dies ist insbesondere der Fall, wenn die Glasdachplatten nach oben schmäler werden (Spitzdach).

Wie erwähnt erfüllen die viereckigen (insbesondere quadratisch) ausgebildeten Glasdachplatten die Funktion von Bedachungsmaterialien, insbesondere von Ziegeln.

Bei rechteckig ausgebildeten Glasdachplatten werden gegenseitig überlappend verlegt und abgedichtet, damit ein luftdichter Flachspalt gewährleistet ist. Seitlich sind Längsprofile angebracht, welche die Dichtigkeit, die Einhaltung des Abstandes und die Befestigung gewährleisten.

Kosteneinsparungen ergeben sich insbesondere dadurch, dass der Ablauf des Regenwassers ohne weitere Massnahme gewährleistet ist, d. h. dass Profile und dergleichen für die seitliche Abdichtung entfallen. Diese Ausführung eignet sich insbesondere für die Massenfertigung und ist kostengünstig zu verlegen.

Die quadratischen Glasdachplatten sind als Dachelemente ästhetisch ansprechend und werden zur Überdeckung des gesamten Daches einschliesslich allfälliger Nebendächer (auch ohne Energiegewinnung) benutzt. Die Glasdachplatten können nicht nur zur Strom- und Wärmegewinnung dienen, sondern auch für den Lichteinfall (Oberlichtfunktion) gestaltet sein (transluzide Dachelemente).

Die Glasdachplatten können auch mit einem Rahmen gehaltert, abgedichtet, verlegt und abgestützt sein. Der Rahmen seinerseits umfasst Befestigungsfüsse, welche den Luftdurchfluss wiederum nicht behindern dürfen.

Da die erfindungsgemäss verlegten quadratischen Glasdachplatten ein übliches Dach ersetzen, sind diese auch bei Sturmböen wasserdicht auszuführen und erfüllen die Schneelastvorschriften. Die Glasdachplatten sind auch begehbar.

Diese Glasdachplatten können erfindungsgemäss für den Dachaufbau wie folgt eingesetzt werden:
- Als konventionelle Glasdachplatten - durchsichtig oder undurchsichtig - zur Abdeckung von Dachteilen, wo keine Energienutzung stattfindet. Dies gilt für die quadratischen Dachplatten, die ästhetisch und einfach zu installieren sind. Die erfindungsgemäss überlappenden Glasdachplatten werden an zwei Ecken mit Hilfe einer speziell ausgebildeten Vorrichtung auf das Unterdach befestigt und gleichzeitig zur Erzielung der Dichtigkeit aufeinander gepresst.
- Als « thermische » Glasdachplatten zur Wärmenutzung durch Erhitzung des Luftstromes im darunter liegenden Luftspalt. In diesem Fall sind die Glasdachplatten für die volle Sonnenstrahlung durchlässig. Die Strahlung wird von einem (unter der Glasdachplatte angeordneten) selektiv beschichteten Absorber absorbiert, der zur direkten effizienten Erwärmung der Luft auf hohe Nutztemperaturen dient (bis zu 100° C)
- Als "photovoltaische Glasdachplatten" mit und ohne gleichzeitige Wärmenutzung (falls mit dem Luftstrom im dahinter liegenden Spalt keine Wärme gewonnen wird, eignet sich dieser zur leistungserhöhenden Kühlung der Zellen. Die Luft erwärmt sich an der Rückseite der Glasdachplatten, wobei Nutztemperaturen bis ca. 55 °C erzielbar sind.
- Als lichtdurchlässige Glasdachplatten mit "Oberlichtfunktion".
- Als teilweise lichtdurchlässige Glasdachplatten mit photovoltaischer Stromerzeugung (durch die Zellen beschattetes Oberlicht), Unterdach durchsichtig oder nur mit den Dachträgern.
- Als teilweise lichtdurchlässige Glasdachplatte zur photovoltaischen und thermischen Energienutzung.

Als Dachaufbau können Dachabschnitte mit nur thermischer oder nur elektrischer Funktion oder nur Oberlichtfunktion installiert werden. Es können auch Dachabschnitte mit elektrisch-thermischer Funktion vorgesehen sein (Lufttemperaturen bis zu 50 °C), sowie mit nachgeschalteten rein thermischen Glasdachplatten zur Erzielung von hohen Temperaturen am Ausgang. Die thermischen Dachplatten wirken somit als "Booster". Weitere Kombinationen für den Einsatz der Glasdachplatten sind ebenfalls möglich im Zusammenhang mit den licht- oder teilweise lichtdurchlässigen Eigenschaften.

Insbesondere mit dem erfindungsgemässen Dachaufbau bestehend aus den quadratischen, ästhetischen Glasdachplatten bietet sich die Möglichkeit, ultramoderne multifunktionale Dächer zu bauen, bei welchen gleichzeitig Strom produziert wird und fossile Brennstoffe für die Wärmegewinnung substituiert werden. Durch die Massenfertigung dieser Dachelemente in Kombination mit der Wärmenutzung lassen sich bei der Installation von Dutzenden von Quadratkilometern interessante Voraussetzungen für die grossmasstäbliche wirtschaftliche Nutzung von Sonnenenergie weltweit erzielen. Allein in der Schweiz kann der vollumfängliche Umstieg auf unerschöpfliche umweltgerechte Energiequellen erfolgen, wenn bereits 10% der Dach- und Fassadenflächen der heute bestehenden Gesamtfläche von 700 km² genutzt werden. Gegenwärtig werden jährlich in der Schweiz 12 km² Dächer gebaut oder erneuert. In Deutschland liegen die vorerwähnten Zahlen beim zehnfachen.

Am Beispiel der quadratischen doppelt überlappenden Glasdachplatten sind nachfolgend die Ausführungsformen der verschiedenen Glasdachplatten beschrieben.
- Glasdachplatte mit einfacher Dachfunktion. Diese besteht aus einer vorderseitig gehärteten Glasplatte mit rückseitig auflaminierter Folie für die Farbgestaltung, sowie den Befestigungselementen und/oder Anpresselementen an den vier Ecken. Für diese Funktion lassen sich jedoch auch andere Materialien verwenden mit gleicher geometrischer Struktur und Befestigungstechnik.
- Falls das Glas lichtdurchlässig bleibt, kann die Glasdachplatte mit Oberlichtfunktion eingesetzt werden.
- Glasdachplatte mit rein thermischer Funktion. Diese besteht aus gehärtetem Glas mit gleicher geometrischer Struktur und Befestigungstechnik.
- Glasdachplatte mit photovoltaischer Funktion. Diese besteht aus einem Photovoltaik-Zellen-Laminat gemäss eingangs beschriebenen Schichtverbund (Silicium-Zellen oder Dünnschichtzellen)
- Glasdachplatte mit Photovoltaikfunktion und Lichtdurchlass, sowie gleicher geometrischer Struktur und Befestigungstechnik. Diese bestehen aus einem Photovoltaiklaminat gemäss dem weiter oben beschriebenen Schichtverbund, wobei die Solarzellen unter Einhaltung eines Abstandes zwischen den Zellen zur Lichttransmission miteinander elektrisch verbunden sind. Die geometrische Struktur und Befestigungstechnik bleibt wiederum gleich.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: Einen Teilbereich einer Gebäudehülle;
- Fig. 2: eine Schnittansicht durch den Teilbereich der Fig.1;
- Fig. 3a: eine Detailansicht eines Gebietes des Teilbereichs der Fig. 1;
- Fig. 3b: eine Schnittansicht durch die Detailansicht der Fig. 3a;
- Fig. 4a: eine Draufsicht auf ein Halteelement;
- Fig. 4b: eine Seitenansicht eines Halteelements;
- Fig. 5a: eine Draufsicht auf eine Platte der Gebäudehülle in der Ausführung als Photovoltaikmodul;
- Fig. 5b: eine Schnittansicht der Platte der Fig. 5a.
Grundsätzlich sind in den Figuren gleiche Teile mit gleichen Bezugszeichen versehen.

### Wege zur Ausführung der Erfindung

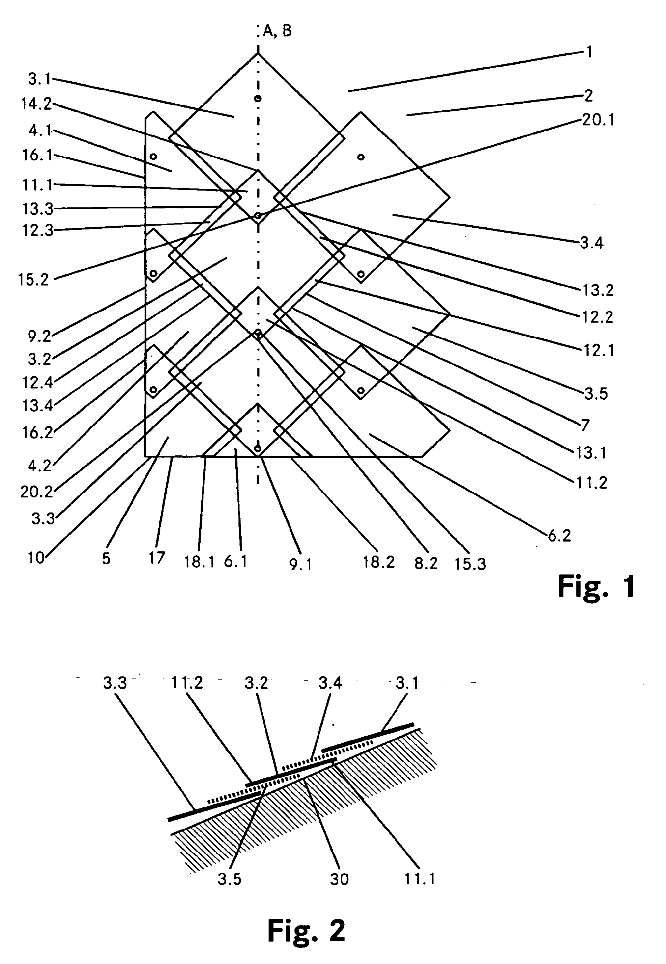

Figur 1 zeigt einen Teilbereich 1 einer Überdeckung 2 umfassend mehrere Platten 3-6, welche zusammen einen Bereich einer erfindungsgemässen Gebäudehülle bilden. Eine derartige Gebäudehülle kann z. B. ein Dach oder aber auch eine Fassade eines Gebäudes oder jede andere denkbare Nutzungsfläche für Sonnenergie überdecken. Der Teilbereich 1 weist einen bezüglich einer Falllinie A unteren quer liegenden Rand 9.1 und einen parallel zur Falllinie A ausgerichteten Rand 9.2 auf. Die Ränder 9.1 und 9.1 stossen in einem rechten Winkel zusammen und bilden eine Ecke 10 des Teilbereichs 1. Den einzelnen Platten 3-6 liegt eine Grundform 7 zugrunde, welche bezüglich einer Falllinie A rautenförmig ist. Insbesondere wird die Grundform 7 der einzelnen Platten 3-6 durch eine Quadratform gebildet, welche derart auf einer Ecke 8 steht, dass eine dieser Ecke gegenüberliegende Ecke 14 ebenfalls auf der Falllinie A liegt. Nicht jede Platte 3-6 weist die vollständige Grundform 7 auf. Je nach ihrer Anordnung in der Überdeckung können die Platten 3-6 unterschiedliche Formen haben. In Fig. 1 sind Grundplatten 3, Falllinienrandplatten 4, Querrandplatten 6 und Eckplatten 5 dargestellt. Die Grundplatten 3 weisen dabei eine vollständige jeweils auf den Ecken 8 stehende quadratische Form, d. h. eine vollständige Grundform 7, auf.

Die Falllinienplatten 4 sind im Randbereich 9.2 des Teilbereichs 1 angeordnet. Die Form der Falllinienrandplatten 4 ergibt sich aus einer geradlinigen Zerteilung der quadratischen regulären Grundform 7, z. B. einer Grundplatte 3, parallel zur Falllinie A. Die Querrandplatten 6 sind im Randbereich 9.1 angeordnet und haben unterschiedliche Formen, welche sich durch geradliniges Zerteilen der quadratischen regulären Grundform 7, z. B. einer Grundplatte 3, senkrecht zur Falllinie A ergeben. Im Eckbereich 10, in welchem die senkrecht zueinander angeordneten Randbereiche 9.1 und 9.2 aneinander stossen, ist die Eckplatte 5 angeordnet. Die Formen der Platten 3-6 sind weiter unten näher beschrieben.

Die Grundplatten 3 weisen dabei jeweils sechs benachbarte Platten (Grundplatten 3.1, 3.3, 3.4, 3.5 sowie Falllinienrandplatten 4.1 und 4.2) auf und sind gleichartig ausgeformt. Im Folgenden wird die Plattenanordnung der Überdeckung 2 anhand einer exemplarisch ausgewählten Grundplatte 3.2 beschrieben.

Die Grundplatten 3.1-3.3 sind in Richtung der Falllinie A derart zueinander angeordnet, dass zur Grundplatte 3.2 benachbarte Grundplatten 3.1 und 3.3 in quadratischen Eckbereichen 11.1 und 1 1.2 mit der Grundplatte 3.2 überlappen. In der Fig. 1 nehmen die Eckbereiche 11 einen kleinen Teil der Gesamtfläche einer Grundplatte 3.2 ein, insbesondere etwa ein Neuntel oder einen Sechzehntel der Gesamtfläche.

Senkrecht zur Falllinie A grenzen vier seitlich benachbarte Platten an die Grundplatte 3.2 (Grundplatten 3.4 und 3.5 sowie Randplatten 4.1 und 4.2). Die benachbarten Platten sind gegenüber der Grundplatte 3.2 um eine halbe Diagonallänge der Grundform 7 in Falllinienrichtung A verschoben angeordnet. In senkrechter Richtung zur Falllinie A sind die benachbarten Platten derart beabstandet, dass Überlappungsbereiche 12.1-12.4 entstehen, welche parallel zu entsprechenden überlappenden Kanten 13.1-13.4 der Grundplatte 3.2 angeordnet sind. Die Bereiche 12 weisen dabei senkrecht zu den Kanten 13 eine Dimension auf, welche vergleichsweise klein ist im Vergleich zur Kantenlänge. Insbesondere entspricht die Dimension der Bereiche 12 senkrecht zu den Kanten 13 in etwa einem Zehntel der Kantenlänge der Grundplatten 3.2. Bevorzugt ist die Breite der Bereiche 12 nicht kleiner als 2 cm.

Bezüglich der Falllinie A sind die beiden Randplatten 4.1 und 4.2 sowie die beiden Grundplatten 3.4 und 3.5 jeweils auf derselben Seite der Grundplatte 3.2 angeordnet. Die Überlappungsbereiche 12.3 und 12.4 liegen dabei in Bereich zwischen Grundplatte 3.2 und Randplatten 4.1 bzw. 4.2 und die Bereiche 12.1 und 12.2 zwischen Grundplatte 3.2 und Grundplatten 3.4 bzw. 3.5.

Die Grundplatte 3.2 hat im Bereich einer unteren Ecke 8.2 eine Durchtrittsöffnung 20.2. Die Durchtrittsöffnung 20.2 ist dabei derart nahe der Ecke 8.2 angeordnet, dass sie in einem Eckbereich liegt, welcher durch gedachte Fortsetzungen der überlappenden Bereiche 12.1 und 12.4 gebildet ist. Weiter weist die Grundplatte 3.2 in einem Bereich an einer der Ecke 8.2 gegenüberliegenden Ecke 14.2 ebenfalls eine Durchtrittsöffnung 15.2 auf, welche bei überlappender Anordnung mit der benachbarten Grundplatte 3.1 in Falllinie A deckungsgleich mit deren Durchtrittsöffnung 20.1 angeordnet ist. Ebenso ist die Durchtrittsöffnung 20.2 deckungsgleich mit der Durchtrittsöffnung 15.3 der Grundplatte 3.3 angeordnet.

Die Falllinienrandplatten 4.1 und 4.2 haben eine Form, welche durch geradliniges Zerteilen längs Zerteilungslinien 16.1 und 16.2 einer der Form der Grundplatte 3.2 entsprechenden Platte in Richtung der Falllinie A entsteht. Die Falllinienrandplatten 4.1 und 4.2 bilden einen Abschluss der Überdeckung 2 zu dem zur Falllinie parallelen Randbereich 9.2. Die Zerteilungslinie 16.1 bzw. 16.2 tritt dabei nicht durch die den Durchtrittsöffnungen 20 und 15 entsprechenden Durchtrittsöffnungen der Falllinienrandplatten 4 hindurch, so dass die Falllinienrandplatten 4 den Grundplatten 3 entsprechende Durchtrittsöffnungen aufweisen. Die Zerteilungslinien 16 fallen mit dem Rand 9.2 zusammen. Die Falllinienrandplatten 4.1 und 4.2 sind gleichförmig ausgebildet.

Die Querrandplatten 6.1 und 6.2 haben eine Form, welche durch geradliniges Zerteilen längs Zerteilungslinien 18.1 und 18.2 einer der Form der Grundplatte 3.2 entsprechenden Platte quer zur Falllinie A entsteht. Die Querrandplatten 6.1 und 6.2 bilden einen Abschluss der Überdeckung 2 zu dem zur Falllinie A senkrechten Rand 9.1. Die Lage der Zerteilungslinien 18.1 und 18.2 hängt dabei von der Anordnung der dem Randbereich 9.1 in Falllinienrichtung A am nächsten angeordneten Grundplatten 3 ab. Je nach Abstand werden die Zerteilungslinien 18.1 und 18.2 mit dem Rand 9.1 zusammenfallend ausgebildet, sodass sich durch die Querrandplatten 6 ein geradlinig durchgehender Rand 9.1 ergibt. Die Querrandplatten 6.1 und 6.2 sind daher nicht gleichförmig ausgebildet und unterscheiden sich aufgrund der oben beschriebenen halben Diagonalverschiebung von in Richtung senkrecht zur Falllinie A benachbarten Platten.

Die Eckplatte 5 hat eine Form, welche z. B. durch nochmaliges Zerteilen der Form der Falllinienrandplatten 4 in einer Richtung senkrecht zur Falllinie A erreicht wird. Die Lage der querliegenden Zerteilungslinie 17 ist dabei derart gewählt, dass sie mit dem Rand 9.1 bzw. mit den Zerteilungslinien 18.1 und 18.2 der Querrandplatten 6.1 und 6.2 zusammenfällt. Randseitige Kanten der Eckplatte 5 bilden somit die von den Rändern 9.1 und 9.2 begrenzte Ecke 10.

Figur 2 zeigt eine Skizze der Anordnung der Grundplatten 3.1 bis 3.3 in Richtung der Falllinie A in Bezug zu einer geneigten überdeckten Fläche 30, z. B. ein Schrägdach. Die Ansicht der Fig. 2 entspricht einer groben Skizze einer Schnittansicht in einer Ebene B, in welcher die Falllinie A liegt und welche senkrecht auf der überdeckten Fläche 30 steht. Wie aus der Fig. 2 erkennbar ist, liegt die Grundplatte 3.1 im Überlappungsbereich 1 1.1 über der Grundplatte 3.2, d. h. auf der der Fläche 30 abgewandten Seite. Im Bereich 11.2 wiederum liegt die Grundplatte 3.2 über der Grundplatte 3.3. Die Lage der Platten 3.4 und 3.5 bzw. 4.1 und 4.2 sind in Fig. 2 gestrichelt eingezeichnet. Die Platten 3.4, 3.5 bzw. 4.1. 4.2 sind derart angeordnet, dass sie zumindest teilweise in den Bereichen 11.1 und 11.2 zwischen den in Falllinienrichtung A benachbarten überlappenden Grundplatten 33.1 und 33.2 sowie 33.2 und 33.3 angeordnet sind. In einer erfindungsgemässen Überdeckung 2 sind sämtliche Platten 3-6 in Richtung der Falllinie A gemäss dem in Fig. 2 gezeigten Überlappungsschema angeordnet.

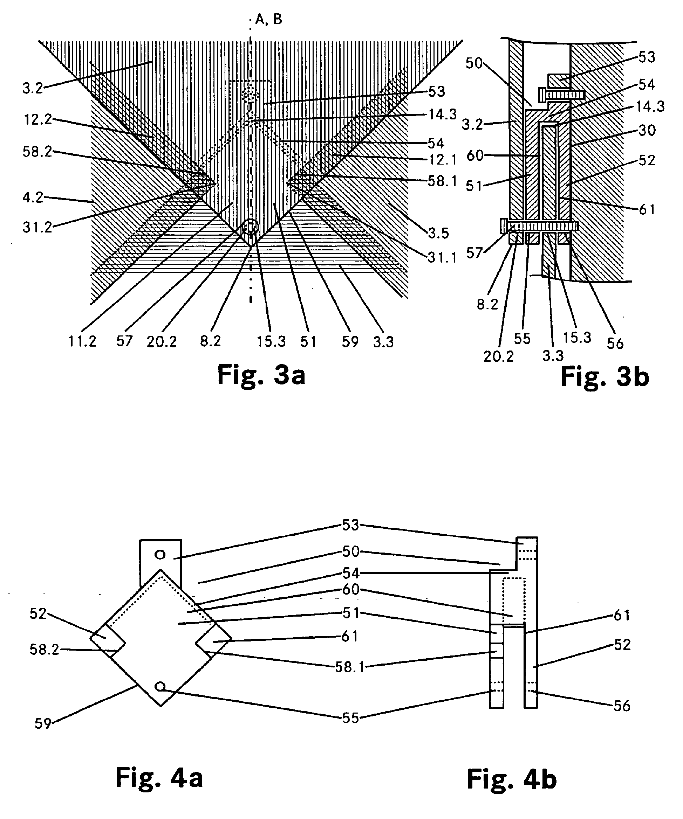

Figur 3a zeigt eine vergrösserte Ansicht des Überlappungsbereichs 11.2. Figur 3b zeigt eine Schnittansicht desselben Bereichs in der Ebene B. Im Folgenden sind beide Figuren gemeinsam beschrieben.

Im Überlappungsbereich 11.2 ist zwischen den Grundplatten 3.2 und 3.3 ein DichtungsElement 51 angeordnet. Das Dichtungselement 51 ist derart ausgeformt, dass es den durch die Platten 3.2, 3.3 und die teilweise dazwischen angeordneten Platten 3.5 und 4.2 gebildeten Zwischenraum im Wesentlichen ausfüllt. Das Dichtungselement 51 ist hierzu im Bereich zwischen den Platten 3.2 und 3.3 als eine Dichtungsplatte ausgebildet. Die Dicke der Dichtungsplatte 51 senkrecht zur Plattenoberfläche entspricht der Dicke einer der Platten 3-6, insbesondere der Platten 3.5 und 4.2. Die Platte 51 hat eine Doppelrautenform 59, gewissermassen eine "Schmetterlingsform", welche durch zwei überlappende quadratische Umrisse gebildet wird. Eine Längsrichtung der Doppelrautenform 59 ist dabei in Falllinienrichtung A angeordnet und zwischen den Grundplatten 3.2 und 3.2 liegende Ecken 31.1 und 31.2 der Platten 3.5 und 4.2 sind in den seitlichen Einbuchtungen 58.1 und 58. 2 der "Einschnürung" der Doppelrautenform 59 angeordnet.

Bevorzugt ist das Dichtungselement 51 an einem Halteelement 50 angeformt, welches einen Bereich an der oberen Ecke 14.3 der Platte 3.3 teilweise umfasst und sich unterhalb der Platte 3.3 in einer Basisplatte 52 fortsetzt. Die Basisplatte 52 liegt dabei zwischen der Platte 3.3 und der überdeckten Fläche 30. Die Bodenplatte 52 setzt sich in Falllinienrichtung A nach oben in einer Befestigungslasche 53 fort, an welcher das Halteelement 50 an der Fläche 30 befestigt werden kann. Das Halteelement 50 hat somit neben der Dichtungsfunktion durch das Dichtungselement 51 auch die Funktion eines Haken- bzw. Halteelements, welches die Platten 3-6 an den jeweils oberen Eckbereich an der jeweiligen Ecke 9 hält. Die Bodenplatte 52 kann dabei z. B. denselben Umriss wie die Dichtungsplatte 51 aufweisen und über Seitenwände 54 mit diesen derart verbunden sein, dass zwischen Seitenwänden 54, Bodenplatte 52 und Dichtungselement 51 ein Aufnahmeraum 60 für den Eckbereich an der Ecke 9 geschaffen wird. Die Seitenwände 54 halten dabei die Bodenplatte 52 und die Dichtungsplatte 51 in einem gewünschten Abstand. Der Aufnahmeraum 60 kann dabei derart ausgestaltet sein, dass eine Innenseite 61 der Bodenplatte 52 eine veränderliche Dicke aufweist, derart, dass eine Neigung der Platte 3.3 gegenüber der Fläche 30 berücksichtigt wird und die Platte 3.3 dennoch flach im Aufnahmeraum 60 auf der Innenseite 61 aufliegt. Dementsprechend liegt dann das Dichtungselement 51 parallel zur Innenseite 61 um einen dem Eckbereich bei der Ecke 14.3 der Platte 3.3 entsprechenden Aufnahmeraum 60 zu schaffen. Der Einfachheit halber ist aber in Fig. 3b eine Neigung der Platten 3.2 bzw. 3.3 gegenüber der Fläche 30 nicht dargestellt. Im Zusammenhang mit Fig. 2 ist aber ersichtlich, wie die Neigungen der Platten gegenüber der Fläche 30 zu berücksichtigen sind.

Die Platten 3.2 und 3.3 sind in der Überdeckung 2 derart angeordnet, dass die Durchtrittsöffnungen 20.2 und 15.3 miteinander fluchten. Bei entsprechenden Durchtrittsöffnungen 55 im Dichtungselement 51 und möglicherweise auch eine Durchtrittsöffnung 56 in der Bodenplatte 53 des Halteelements 50 kann ein Befestigungselement 57 durch die Öffnung 20.2, 55, 15.3 und 56 hindurch treten und in der Fläche 30 verankert werden. Als Befestigungselement 57 sind hierbei z. B. eine Schraube, Niete oder anderweitige bekannte Befestigungselemente 57 denkbar. Es ist aber auch denkbar, dass das Befestigungselement 57 nur im Dichtungselement 51 verankert wird und die Platte 3.3 nur im Halteelement 50 angeordnet und nicht weiter am Halteelement 50 fixiert ist. Gesamthaft kann dann die Fixierung der Platte 3.3 erreicht werden, indem die Platte 3.3 an ihrer Durchtrittsöffnung 20.3 mit einem weiteren (nicht dargestellten) Halteelement entsprechend der Platte 3.2 mit dem Halteelement 50 verbunden ist.

Figuren 4a und 4b zeigen jeweils eine Aussenansicht eines Halteelements 50 mit Dichtungselement 51 ohne Platten einer Überdeckung, wobei in Fig. 4a eine Draufsicht und in Fig. 4b eine Seitenansicht gezeigt ist. Die Anordnungen des Halteelements 50 der Fig. 4a und 4b entsprechen dabei weitgehend den Darstellungen der Fig. 3a und 3b.

Die Bodenplatte 52 ist wie in Fig. 4a ersichtlich quadratisch ausgebildet. Die Dichtungsplatte 51 hingegen weist die Einbuchtungen 58.1 und 58.2 für Ecken 31.1 und 31.2 weitere Platten auf.

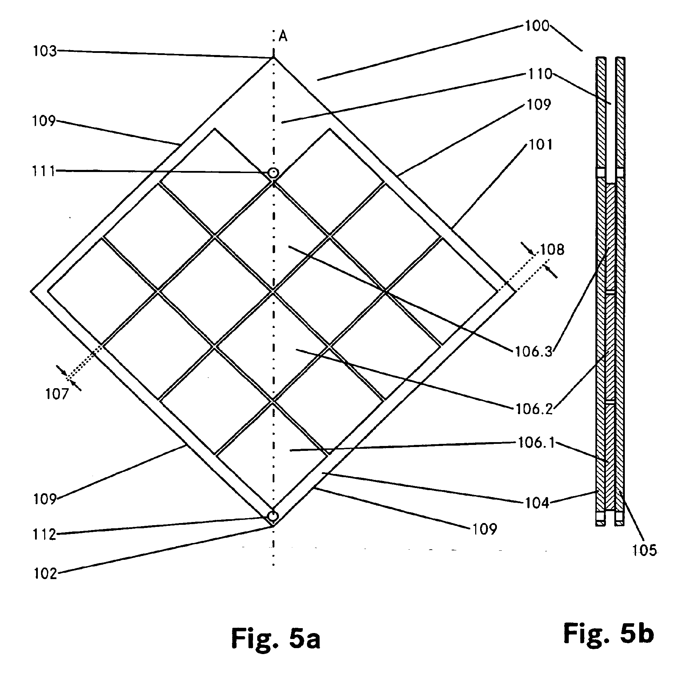

Figur 5a zeigt eine Grundplatte 100, welche als Solarpanel bzw. Photovoltaikmodul ausgebildet ist. Die Grundplatte 100 hat einen quadratischen Umriss 101 mit Kanten 109, welcher bezüglich der Falllinie A derart angeordnet ist, dass er auf einer Ecke 102 steht und eine gegenüberliegende Ecke 103 auf der Falllinie A liegt, welche durch die Ecke 102 geht. Eine Richtung zur Ecke 102 wird als "Unten" bezeichnet und eine Richtung zur Ecke 103 als "Oben". Figur 5b zeigt einen Schnitt durch die Platte 100 längs der Falllinie A (in der Ebene B).

Die Grundplatte 100 umfasst eine quadratische Platte 104 z. B. aus Kunststoff oder Glas. Die Platte 104 liegt dabei aussenseitig, d. h. bei einem Einbau gemäss den Grundplatten 3 der Figuren 1-3 auf einer von der Fläche 30 abgewandten Seite. An der Rückseite, d. h. auf einer der Fläche 30 zugewandten Seite, kann eine Folie oder eine weitere Glas- bzw. Kunststoffplatte 105 aufgebracht sein. Zwischen den Platten 104 und 105 befinden sich Solarzellen 106.1- 106.n, welche in der Darstellung der Fig. 5a und 5b als quadratische Scheiben ausgebildet sind. Die Solarzellen 106 können aber auch als Streifen oder in jeder anderen geeignet erscheinenden Form ausgestaltet sein. In der Darstellung der Fig. 5 sind 15 Solarzellen 106 vorhanden, welche jeweils einen quadratischen Umriss aufweisen. Die quadratischen Solarzellen 106 sind in einem regelmässigen 4x4 Muster mit parallel zu den Kanten 109 der Grundform 101 ausgerichteten Kanten angeordnet. Benachbarte Solarzellen 106 weisen einen ersten Abstand 107 zueinander auf. Die Solarzellen, welche an einen Rand des quadratischen Grundrisses 101 der Grundplatte 100 liegen, sind zudem durch einen Abstand 108 vom Rand des Grundrisses 101 beabstandet. An der oberen Ecke 103 ist ein quadratischer Bereich 110 freigelassen (d. h. weist keine Solarzelle auf) welcher dem Platz entspricht, den eine sechzehnte Solarzelle im regelmässigen 4x4 Muster einnehmen würde. Die Solarzellen 106 sind miteinander verkabelt und weisen, bevorzugt rückseitig, eine Möglichkeit zum Abgriff des erzeugten Solarstroms auf (Verkabelung und Abgriff nicht dargestellt). Hierbei kann es sich beispielsweise um eine Steckdose oder um Kabelanschlüsse handeln.

Der Abstand 108 von den Kanten 109 entspricht in etwa einem Zwanzigstel der Kantenlänge der quadratischen Form 101. Der Abstand 108 kann aber je nach Bedarf auch anders gewählt sein und ist bevorzugt grösser als 2 cm. Insbesondere sind kann der Abstand 108 in etwa 3.5 cm betragen. Der Abstand 107 zwischen benachbarten Solarzellen 106 kann ebenfalls entweder gleich gross, kleiner oder aber auch grösser gewählt werden. In der Darstellung beträgt der Abstand 107 in etwa ein Zehntel des Abstandes 108. Der Abstand 108 ist bevorzugt derart gewählt, dass er im Wesentlichen der Breite der Überlappungsbereiche 12 in Richtung senkrecht zu den Kanten 13 in einem Einbau gemäss den Grundplatten 3 der Figuren 1-3 entspricht. Damit wird bei der Ausführung als Photovoltaikmodul der Platte 100 erreicht, dass durch die Überlappung benachbarter Platten die wirksame Fläche der Solarzellen 106 nicht verringert wird. Aus demselben Grund ist auch der freigelassene Bereich 110 an der oberen Ecke 103 bevorzugt derart bemessen, dass er bei einem Einbau gemäss den Grundplatten 3 der Figuren 1-3 dem Überlappungsbereich 11.1 bzw. 11.2 von in Falllinienrichtung A benachbarter Platten z. B. 3.1-3.3 entspricht.

Im Rahmen der bevorzugten Ausbildung der Abstände 108 und des Bereichs 110, welche durch die Anordnung der Platten 100 in einer erfindungsgemässen Überdeckung vorgegeben sind, können jedoch der Abstand 107 sowie die Grösse und Anzahl der einzelnen Solarzellen 106 je nach Anforderung angepasst werden. Beispielsweise ist es auch denkbar, nur 8 Solarzellen in einem regelmässigen 3x3 Muster anzuordnen, wobei wiederum das fehlende Feld an einer oberen Ecke ausgebildet ist. Ebenso können streifenförmige Solarzellen eingesetzt werden, welche die bevorzugt freizuhaltenden Bereiche auf der Platte 100 frei lassen.

Die Platte 100 weist ähnlich der Ausführung der Grundplatten 3 der Fig. 1-3 eine obere 111 und eine untere Durchtrittsöffnung 112 auf. Die untere Durchtrittsöffnung 112 ist in einem solarzellenfreien Eckbereich an der Ecke 102 ausgebildet. Die Durchtrittsöffnung 112 tritt durch die aussenseitige Platte 104 und die rückseitige Platte bzw. Folie 105 hindurch und liegt auf der Falllinie A, welche durch die Ecken 102 und 103 der Platte 100 geht.

Die obere Durchtrittsöffnung 111 ist im solarzellenfreien Bereich 110 ausgebildet. Insbesondere ist die Durchtrittsöffnung 111 an einer unteren Ecke 113 des quadratischen Bereichs 110 ausgebildet und liegt ebenfalls auf der Falllinie A. Es ist aber auch denkbar, die Durchtrittsöffnungen an anderen solarzellenfreien Bereichen der Platte 100 auszubilden. Je nach Anordnung der Platten 100 in einer Überdeckung und/oder Befestigungsanordnungen zur Befestigung der Platten 100 können die Durchtrittsöffnungen auch im Bereich zwischen zwei Solarzellen und/oder nicht auf der Falllinie A liegend angeordnet sein.

## Patentansprüche

1. Wetterfeste Gebäudehülle, insbesondere Schrägdach, mit mehreren viereckigen wetterfesten Platten (3.1, 3.2, 3.4, 4.1),
a) welche bezüglich einer Falllinie (A) in Diagonallage mit schuppenartiger gegenseitiger Überlappung verlegt sind,
b) wobei quer zur Falllinie (A) sich in einem Randbereich überlappende Platten (3.1, 3.2, 3.4, 4.1) zueinander versetzt sind,
**dadurch gekennzeichnet, dass**
c) die Platten (3.1, 3.2, 3.4, 4.1) jeweils an einem bezüglich einer Falllinie unten liegenden Eckbereich mit einer Tragkonstruktion verbunden sind,
d) wobei bei dem genannten Eckbereich der Platte (3.1, 3.2, 3.4, 4.1) jeweils ein Dichtungselement (51) angeordnet ist, welches einen Spalt zwischen quer zur Hauptrichtung auf gleicher Höhe angeordneten Platten (3.1, 3.2, 3.4, 4.1) verschliesst.

2. Gebäudehülle nach Anspruch 1, **dadurch gekennzeichnet, dass** die viereckigen Platten (3.1, 3.2, 3.4, 4.1) in zwei einander gegenüber liegenden Eckbereichen je eine Durchtrittsöffnung für ein Befestigungselement (57) aufweisen, sodass die Platten (3.1, 3.2, 3.4, 4.1) an ihrem in Hauptrichtung (A) unten und oben liegenden Eckbereichen mit der Tragkonstruktion verbunden sind.

3. Gebäudehülle nach einem der Ansprüche 1 oder 2, **dadurch gekennzeichnet, dass** die Platten (3.1, 3.2, 3.4, 4.1) eine Glasplatte aufweisen und mit Solarzellen (106.1...106.n) ausgerüstet sind, wobei der Randbereich frei von Solarzellen (106) ist.

4. Gebäudehülle nach einem der Ansprüche 1 bis 3, **dadurch gekennzeichnet, dass** die Platten (3.1, 3.2, 3.4, 4.1) quadratisch sind.

5. Gebäudehülle nach einem der Ansprüche 1 bis 4, **dadurch gekennzeichnet, dass** in einem Eckbereich der Randbereich quadratförmig erweitert ist, indem eine Solarzelle (106) aus dem ansonsten quadratischen Solarzellenbereich ausgelassen ist.

6. Gebäudehülle nach einem der Ansprüche 1 bis 5, **dadurch gekennzeichnet, dass** die quer zur Hauptrichtung (A) auf gleicher Höhe angeordneten Platten (3.1, 3.2, 3,4, 4.1) gegenseitig beabstandet sind.

7. Gebäudehülle nach einem der Ansprüche 1 bis 6, **dadurch gekennzeichnet, dass** das Dichtungselement (51) an der Befestigung angebracht ist.

8. Gebäudehülle nach Anspruch 7, **dadurch gekennzeichnet, dass** das Dichtungselement (51) ein plattenförmiges Element mit einer Durchtrittsöffnung ist für das Befestlgungselement (57).

9. Gebäudehülle nach einem der Ansprüche 1 bis 8, **dadurch gekennzeichnet, dass** in einem Rand der Gebäudehülle Platten ohne Solarzellen (106) vorgesehen sind (Randabschlussplatten).

## Claims

1. Weatherproof building envelope, especially a sloped roof, with several quadrilateral weatherproof panels (3.1, 3.2, 3.4, 4.1),
a) which are installed with respect a line of slope (A) in a diagonal position with scale-like mutual overlapping,
b) wherein the panels (3.1, 3.2, 3.4, 4.1) which overlap transversely to the line of slope (A) in the edge region are offset to one another,
**characterized in that**
c) the panels (3.1, 3.2, 3.4, 4.1) are connected to a bearing structure on one corner region which is underneath with respect to the line of slope,
d) wherein a sealing element which closes the gap between the panels (3.1, 3.2, 3.4, 4.1) arranged transversely to the main direction at the same height is arranged in the indicated corner region of the panel (3.1, 3.2, 3.4, 4.1).

2. Building envelope as claimed in claim 1, **characterized in that** the quadrilateral panels (3.1, 3.2, 3.4, 4.1) each have a through opening for a fastener in two opposite corner regions so that the panels (3.1, 3.2, 3.4, 4.1) are connected to the bearing structure on their corner regions which lie at the top and bottom in the main direction (A).

3. Building envelope as claimed in one of claims 1 or 2, **characterized in that** the panels (3.1, 3.2, 3.4, 4.1) comprise a glass panel and are equipped with solar cells (106.1,...,106.n), wherein the edge region is free of solar cells.

4. Building envelope as claimed in one of claims 1 to 3, **characterized in that** the panels (3.1, 3.2, 3.4, 4.1) are square.

5. Building envelope as claimed in one of claims 1 to 4, **characterized in that** the edge region is widened in the shape of a square in one corner region by leaving out one solar cell of the otherwise square solar cell region.

6. Building envelope as claimed in one of claims 1 to 5, **characterized in that** the panels (3.1, 3.2, 3.4, 4.1) which are located transversely to the main direction (A) at the same height are mutually spaced.

7. Building envelope as claimed in one of claims 1 to 6, **characterized in that** the sealing element (51) is attached to the fastening.

8. Building envelope as claimed in claim 7, **characterized in that** the sealing element (51) is is a panel-like element with a through opening for the fastener (57).

9. Building envelope as claimed in one of claims 1 to 8, **characterized in that** panels without solar cells (edge termination panels) are provided for the edge of the building envelope.

## Revendications

1. Enveloppe de bâtiment résistante aux intempéries, en particulier toit incliné, comprenant plusieurs plaques carrées à l'épreuve des intempéries (3.1, 3.2, 3.4, 4.1),
a) qui sont posées par rapport à une ligne de pente (A) en position diagonale avec un recouvrement réciproque de façon imbriquée du type écailleux,
b) des plaques (3.1, 3.2, 3.4, 4.1) se chevauchant dans une zone de bordure étant décalées les unes par rapport aux autres transversalement à la ligne de pente (A),
**caractérisée en ce que**
c) les plaques (3.1, 3.2, 3.4, 4.1) sont reliées à une structure porteuse dans une zone d'angle située en bas par rapport à une ligne de pente,
d) un élément d'étanchéité (51), qui ferme une fente entre des plaques (3.1, 3.2, 3.4, 4.1) disposées transversalement à la direction principale à la même hauteur, étant disposé sur ladite zone d'angle de chaque plaque (3.1, 3.2, 3.4, 4.1).

2. Enveloppe de bâtiment selon la revendication 1, **caractérisée en ce que** les plaques carrées (3.1, 3.2, 3.4, 4.1) présentent dans deux zones d'angle se faisant face une ouverture de passage pour un élément de fixation (57), de sorte que les plaques (3.1, 3.2, 3.4, 4.1) sont reliées à la structure porteuse sur leurs zones d'angle disposées en bas et en haut dans la direction principale (A).

3. Enveloppe de bâtiment selon l'une quelconque des revendications 1 ou 2, **caractérisée en ce que** les plaques (3.1, 3.2, 3.4, 4.1) présentent une plaque de verre et sont équipées de cellules solaires (106.1 ... 106.n), la zone de bordure étant exempte de cellules solaires (106).

4. Enveloppe de bâtiment selon l'une quelconque des revendications 1 à 3, **caractérisée en ce que** les plaques (3.1, 3.2, 3.4, 4.1) sont carrées.

5. Enveloppe de bâtiment selon l'une quelconque des revendications 1 à 4, **caractérisée en ce que** la zone périphérique dans une zone d'angle est élargie en forme de carré en omettant une cellule solaire (106) de la zone de cellules solaires sinon carrée.

6. Enveloppe de bâtiment selon l'une quelconque des revendications 1 à 5, **caractérisée en ce que** les plaques (3.1, 3.2, 3.4, 4.1) disposées à la même hauteur transversalement à la direction principale (A) sont espacées de façon réciproque.

7. Enveloppe de bâtiment selon l'une quelconque des revendications 1 à 6, **caractérisée en ce que** l'élément d'étanchéité (51) est placé sur la fixation.

8. Enveloppe de bâtiment selon la revendication 7, **caractérisée en ce que** l'élément d'étanchéité (51) est un élément en forme de plaque avec une ouverture de passage pour l'élément de fixation (57).

9. Enveloppe de bâtiment selon l'une quelconque des revendications 1 à 8, **caractérisée en ce que** des plaques sans cellules solaires (106) sont prévues sur un bord de l'enveloppe de bâtiment (plaques de fermeture de bord).
